# EUROPEAN PATENT SPECIFICATION

(11) **EP 3 971 808 B1**
(45) Date of publication and mention of the grant of the patent: **26.02.2025**
(21) Application number: 21197216.1
(22) Date of filing: 16.09.2021
(51) Int. Cl.: G06Q 10/10, G06Q 10/107, H04L 51/23, H04L 51/48

(54) **METHOD FOR SENDING AN ENCRYPTED MESSAGE**
VERFAHREN ZUM SENDEN EINER VERSCHLÜSSELTEN NACHRICHT
MÉTHODE D'ENVOI D'UN MESSAGE CRYPTÉ

(30) Priority: 17.09.2020 FI 20205897
(43) Date of publication of application: 23.03.2022
(73) Proprietor: Info Center International ICF OY, 02150 Espoo (FI)
(72) Inventor: Kallioniemi, Jussi, 02150 Espoo (FI); Vettenniemi, Markku, 02150 Espoo (FI)
(74) Representative: LEITZINGER OY

(56) References cited:
- US-A1- 2018 152 302
- US-A1- 2020 153 841

## Description

The invention relates to a method for sending an encrypted message securely from a sender to a recipient, whereby the sender is also given an acknowledgment that the message was received and opened.

These days, a physical registered letter is sent in order to verify the sending of a message. However, with a registered letter it cannot to be proven that the letter has been opened. By using a physical registered letter with a form of acknowledgement of receipt, the reception of a letter, in addition to its sending, may be verified. Often, an option of a read receipt can be included in an e-mail message, which the recipient will see after opening the e-mail message. This read receipt can, however, be easily bypassed, because an e-mail program asks the recipient whether they wish to acknowledge the message as received, at which time the message recipient may refuse to do so.

However, a registered letter with a form of acknowledgement of receipt is an old-fashioned, expensive, and slow method of communication, which does not solve the problem despite solving the verification of reception.

E-mail is often not used for sending sensitive or secret messages, in particular if the messages include personal details or business secrets. Different kinds of secure, encrypted e-mail services exist, which solve the problem related to the speed of encrypted communications, but a problem with them is that they are services that usually work as a continuous service or as a plug-in in a user's own e-mail program. If a need exists to send a single message, which also gives a forced read receipt, the existing services do not solve the problem. The document US 2020/153841, 14th May 2020 (2020/05/14), describes a system for securely transmitting encrypted emails, utilizing a verification protocol to enhance security. The document US 2018/152302, 31st May 2018 (2018/05/31), discloses a method for securely transmitting email messages to ensure that only the intended recipient can access them.

The solution to solve the problem is a method for sending an encrypted e-mail message securely from a sender to a recipient, whereby an acknowledgment is delivered to the sender on the reception and opening of the message.

The invention is defined by independent claim 1. Further embodiments are described by the dependent claims.

The system works so that a link or other guidance information is delivered e.g. to the recipient's normal e-mail or another instant messaging device, by means of which the recipient is able to retrieve the encrypted message. To open the message, a message-specific password sent by the system is needed, submitted e.g. to the recipient's mobile phone, by means of which the recipient may download the encrypted message on an encrypted connection. The system sends an acknowledgment of receipt to the sender when the recipient of the message has opened the encrypted message.

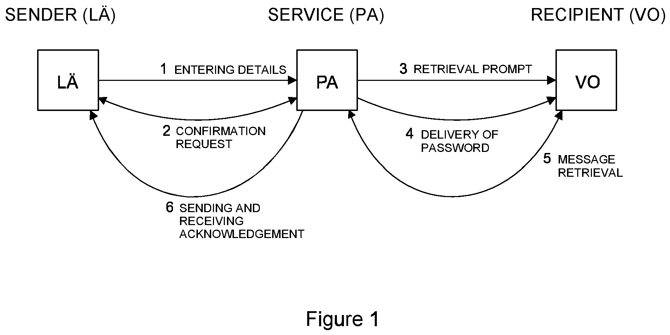

The invention will next be described by a drawing in which, in accordance with the preferred embodiment shown in Figure 1, an e-mail message is securely and provably sent from a sender to a recipient, wherein the sender (LÄ) enters (1) into a service (PA) the recipient's (VO) and his own e-mail address as well as his own and the recipient's the phone number, and the message content. Following this, the sender (LÄ) receives in his e-mail a confirmation request (2) of the sending. The sender (LÄ) confirms his e-mail address and the sending by acknowledging the confirmation request. The system delivers a request (3) to retrieve the message and a password (4) to the recipient (VO). Then, the recipient (VO) may retrieve (5) the message by using the password, after which the system sends a sending and receiving acknowledgment (6) to the sender (LÄ) of the message.

According to the preferred embodiment, the recipient is able to reply to the message that the sender sent. After sending a reply, the recipient gets an acknowledgment that a notification of the message has been sent to the other party for whom a password, too, has been delivered for opening the message.

When the sender opens the service, which is advantageously a web-based service, a window opens for him, in which he enters the recipient's e-mail. After this, the sender creates a message by clicking himself to the next phase of the service. At this phase, the sender writes the message to be sent, and its subject, and enters his phone number and e-mail address into the service. This e-mail address and phone number are used to verify the authenticity of the sender so that it would not be possible to send encrypted messages by using another person's e-mail address. In addition, the e-mail address and phone number are used for delivering a password and reply message. The sender also enters the recipient's phone number to which the system sends the password so that the message may be opened. The sender may also attach attachments to the message from his own computer.

After this, the sender moves on to a payment phase. The methods of payment advantageously include, in addition to an online bank payment, credit card, bank card, PayPal, and other electronic methods of payment in common use. After the method of payment has been selected, the service requests entering the details of the payment card, or moves to the webpage of a second service for the duration of the payment transaction, and returns to the service provider's webpage after that. The payment phase enhances the information security of the service by, for example, rendering the sending of mass messages impossible for the purpose of phishing, and allowing the authorities to track down the message sender with the help of the means of payment.

After the payment transaction is complete, the service notifies the sender of a receipt for the purchase having been submitted to the sender's e-mail address. The service additionally advises that the encrypted message will be delivered to the recipient once the sender has confirmed his e-mail address to the service. The confirmation is preferably performed through a link in the acknowledgement message, which the sender clicks on.

The acknowledgment message sent to the sender preferably comprises, in addition to the confirmation link, a receipt which shows the payment carried out, with tax, the service provider, receipt number, as well as the recipient's e-mail address and phone number.

After the sender has opened the acknowledgment message, a window preferably opens which states that a notification of arrival of the message and password have been sent to the recipient. Preferably, the sender's and recipient's e-mail addresses are at this phase displayed to the sender. The notification preferably also includes information on the service sending information to the sender on the recipient having opened the message.

The service sends the recipient an e-mail notification which comprises a notification on that an encrypted message has been sent to him through the service. The notification sent to the recipient preferably also comprises information on the address the message was sent from, time of sending the message, and how long the message will be kept in the service before it is removed, in other words, by which time the message has to be opened. The notification additionally includes a link or other guidance information to the actual sent message. By clicking on the link, a window opens for the recipient, which requests for the password that was sent to his phone. After entering the password, the recipient is able to retrieve the message.

The guidance to the message to be retrieved may preferably be arranged without a link so that the arrived e-mail displays a code that must be entered to the service, whereby the service instructs to retrieve the message. By following this practice, sending a link on the basis of which some e-mail programs interpret the e-mail to be a junk e-mail, sent for phishing purposes, may be avoided.

According to a preferred embodiment, it is also possible to reply to a retrieved message. The message is replied to in the same ways as a regular e-mail message by typing the reply in the message window, and if so required, it is also possible to add attachments from one's own computer or another terminal device. After the sending of the message, the recipient, in this case the sender of the original message, is sent a message containing a message retrieval prompt by e-mail or by using another way of communications on that a reply has been received, and a password needed for opening is sent to the phone. The sender of the reply message is given an acknowledgment on the sending of the message, stating that a notification of an encrypted message has been sent to the recipient of the reply message.

According to a preferred embodiment, the password sent to the phone is sent by a text message (SMS).

According to a preferred embodiment, encrypted messages are delivered to a recipient by using an encryption protocol, advantageously such as Transport Layer Security (TLS).

According to an advantageous embodiment, a ciphered and encrypted copy of the message content is delivered to the sender of the message, whereby the message content may be later on verified by using a decryption key. The decryption key may be stored on the server from which the message is deleted for security reasons. This way, it is possible later on to prove, with the read receipt, that the recipient has received the message and also the content of the received message may be verified. The method therefore produces in addition to the provability of a physical registered letter and that of a physical registered letter with a form of acknowledgement of receipt, also a proof of the received message content.

According to an embodiment, the server provides the sender with a downloadable compressed file (such as ZIP compression) which contains a copy of the content of the message delivered to the recipient, with its attachments, and a message identifier. The server has advantageously calculated, in connection with forming the compressed file, a checksum from the content of the compressed sending. The message identifier and checksum remain on the server. This way, by providing the server later on with a ZIP package and identifier information it may be proved that the content of the ZIP package is the same as that originally sent by the sender to the recipient with the message identifier in question. The method therefore produces in addition to the provability of a physical registered letter and that of a physical registered letter with a form of acknowledgement of receipt, also a proof of the received message content.

One of the advantages of the method, compared with the existing services of encrypted e-mails, in addition to the read receipt corresponding to the delivery confirmation is that the method does not require registration or a long subscription period, nor is it tied to a particular e-mail address, but it may be used by anyone having a mobile phone and e-mail address as well as the chance for digital payments. An advantage of the service lies in its simplicity, ease, and operation anywhere through an internet connection. The message is delivered immediately and there will be no problem with the receiving person having to pick up a letter at a post office, but the message is directly received where the recipient is.

## Claims

1. A method for sending an encrypted e-mail message securely and provably from a sender to a recipient, comprising the steps wherein:
the sender begins by entering (1) to a service the recipient's e-mail address, after which he enters the next phase of the service, where he writes contents of the message and enters his own e-mail address, as well as the recipient's and his own phone number into the service;
after this the sender enters the payment phase of the service, where the payment for the service is performed;
in the following phase the sender receives (2) by e-mail a confirmation request of the sending;
after this the sender confirms his e-mail address and sending by acknowledging the confirmation request;
next the system delivers (3) a prompt to retrieve the message and a password (4) to the recipient;
and
finally the recipient retrieves (5) the message by means of the password, after which the system sends (6) a sending and reception acknowledgement about this to the message sender.

2. A method as claimed in claim 1 for sending an encrypted e-mail message,
which additionally comprises:
the recipient sends a reply to the sender's message;
after sending the message, the recipient receives an acknowledgment on that a notification of the message has been sent to the other party for whom a password for opening the message has also been delivered.

3. A method as claimed in claim 1, wherein the sender may also send, in addition to a message, attachments to the recipient.

4. A method as claimed in any one of the preceding claims, wherein the server additionally provides the sender with a downloadable compressed file which contains a copy of the content of the message delivered to the recipient,
with its attachments, and a message identifier;
in connection with forming the compressed file, the server calculates a checksum from the content of the compressed sending, which is stored on the server with the identifier;
**characterised in that**: when the sender later on provides the server with the compressed file and identification information, it may be proven that the content of the package is the same as that originally delivered by the sender to the recipient with the message identifier in question.

5. A method as claimed in any one of the preceding claims, wherein the password is sent as a text message, SMS.

6. A method as claimed in any one of the preceding claims, wherein encrypted messages are delivered to the recipient on a secure connection, TLS.

## Patentansprüche

1. Verfahren zum sicheren und nachweisbaren Senden einer verschlüsselten E-Mail-Nachricht von einem Sender an einen Empfänger, umfassend die Schritte, wobei:
der Sender damit beginnt, eine E-Mail-Adresse des Empfängers in eine Dienstleistung einzugeben (1), wonach er die nächste Phase der Dienstleistung eingibt, wo er Inhalt der Nachricht schreibt und seine eigene E-Mail-Adresse wie auch die Telefonnummer des Empfängers und seine eigene in die Dienstleistung eingibt;
danach der Sender die Zahlungsphase des Dienstes eingibt, wo die Zahlung für die Dienstleistung durchgeführt wird;
in der folgenden Phase der Sender per E-Mail eine Bestätigungsanfrage der Sendung empfängt (2);
danach der Sender seine E-Mail-Adresse und Senden durch Bestätigen der Bestätigungsanfrage bestätigt;
danach das System eine Aufforderung, die Nachricht abzurufen, und ein Passwort (4) an den Empfänger liefert (3); und
schließlich der Empfänger die Nachricht mit Hilfe des Passworts abruft (5), wonach
das System eine Sende- und Empfangsbestätigung darüber an den Nachrichtensender sendet (6).

2. Verfahren nach Anspruch 1 zum Senden einer verschlüsselten E-Mail-Nachricht, das zusätzlich umfasst:
der Empfänger sendet eine Antwort auf die Nachrichten des Senders;
nach Senden der Nachricht empfängt der Empfänger eine Bestätigung darüber, dass eine Meldung der Nachricht an die andere Partei gesendet wurde, für die auch ein Passwort zum Öffnen der Nachricht geliefert wurde.

3. Verfahren nach Anspruch 1, wobei der Sender auch zusätzlich zu einer Nachricht Anhänge an den Empfänger senden kann.

4. Verfahren nach einem der vorstehenden Ansprüche, wobei der Server zusätzlich dem Sender eine herunterladbare komprimierte Datei bereitstellt, die eine Kopie des Inhalts der Nachricht, die an den Empfänger geliefert wird, mit ihren Anhängen und eine Nachrichtenkennung enthält;
in Verbindung mit bilden der komprimierten Datei der Server eine Prüfsumme aus dem Inhalt der komprimierten Sendung berechnet, die auf dem Server mit der Kennung gespeichert wird;
**dadurch gekennzeichnet, dass**: wenn der Sender später dem Server die komprimierte Datei und Kennungsinformationen bereitstellt, nachgewiesen werden kann, dass der Inhalt des Pakets derselbe wie jener ist, der ursprünglich von dem Sender an den Empfänger mit der fraglichen Nachrichtenkennung geliefert wurde.

5. Verfahren nach einem der vorstehenden Ansprüche, wobei das Passwort als eine Textnachricht, SMS, gesendet wird.

6. Verfahren nach einem der vorstehenden Ansprüche, wobei verschlüsselte Nachrichten an den Empfänger auf einer sicheren Verbindung, TLS, geliefert werden.

## Revendications

1. Procédé pour envoyer un message électronique crypté de manière sécurisée et prouvable d'un expéditeur à un destinataire, comprenant les étapes dans lesquelles :
l'expéditeur commence par entrer (1) dans un service l'adresse e-mail du destinataire, après quoi il entre dans la phase suivante du service, où il écrit le contenu du message et entre sa propre adresse e-mail, ainsi que celle du destinataire et son propre numéro de téléphone dans le service ;
après cela, l'expéditeur entre dans la phase de paiement du service, où le paiement pour le service est effectué ;
dans la phase suivante, l'expéditeur reçoit (2) par e-mail une demande de confirmation de l'envoi ;
après cela, l'expéditeur confirme son adresse e-mail et l'envoi en accusant réception de la demande de confirmation ;
ensuite, le système envoie (3) une invite de récupération du message et un mot de passe (4) au destinataire ; et
enfin, le destinataire récupère (5) le message au moyen du mot de passe, après quoi le système envoie (6) un accusé de réception et d'envoi concernant ceci à l'expéditeur du message.

2. Procédé selon la revendication 1 pour envoyer un message de courrier électronique crypté, qui comprend en outre les actions suivantes :
le destinataire envoie une réponse au message de l'expéditeur ;
après l'envoi du message, le destinataire reçoit un accusé de réception indiquant qu'une notification du message a été envoyée à l'autre partie à qui un mot de passe pour l'ouverture du message a également été délivré.

3. Procédé selon la revendication 1, dans lequel l'expéditeur peut également envoyer, en plus d'un message, des pièces jointes au destinataire.

4. Procédé selon l'une quelconque des revendications précédentes, dans lequel le serveur fournit en outre à l'expéditeur un fichier compressé téléchargeable qui contient une copie du message de contenu délivré au destinataire, avec ses pièces jointes et un identifiant de message ;
en liaison avec la formation du fichier compressé, le serveur calcule une somme de contrôle à partir du contenu de l'envoi compressé, qui est stockée sur le serveur avec l'identifiant ;
**caractérisé en ce que** : lorsque l'expéditeur fournit ultérieurement au serveur le fichier compressé et les informations d'identification, il peut être prouvé que le contenu du paquet est le même que celui initialement délivré par l'expéditeur au destinataire avec l'identifiant de message en question.

5. Procédé selon l'une quelconque des revendications précédentes, dans lequel le mot de passe est envoyé sous la forme d'un message textuel, SMS.

6. Procédé selon l'une quelconque des revendications précédentes, dans lequel des messages cryptés sont délivrés au destinataire sur une connexion sécurisée, TLS.
